# EUROPÄISCHE PATENTSCHRIFT

(11) **EP 3 719 158 B1**
(45) Veröffentlichungstag und Bekanntmachung des Hinweises auf die Patenterteilung: **26.01.2022**
(21) Anmeldenummer: 19166544.7
(22) Anmeldetag: 01.04.2019
(51) Int. Cl.: B22F 1/00, B22F 5/00, C22C 38/00, B33Y 70/00, B33Y 80/00, C22C 38/50, C22C 38/44, C22C 38/16, C22C 38/14, C22C 38/12, C22C 38/08, C22C 38/06, C22C 38/04, C22C 38/02, C22C 33/02, B22F 3/24, B22F 3/105, B22F 10/20, B22F 10/64, B33Y 40/20, B33Y 10/00, B29C 64/153

(54) **VERWENDUNG EINES STAHLPULVERS, VERFAHREN ZUR HERSTELLUNG EINES STAHLBAUTEILS DURCH EIN ADDITIVES FERTIGUNGSVERFAHREN**
USE OF A STEEL POWDER, METHOD FOR PRODUCING A STEEL COMPONENT BY MEANS OF ADDITIVE MANUFACTURING
UTILISATION D'UNE POUDRE D'ACIER, PROCÉDÉ DE FABRICATION D'UN COMPOSANT D'ACIER SELON UN PROCÉDÉ DE FABRICATION ADDITIVE

(43) Veröffentlichungstag der Anmeldung: 07.10.2020
(73) Patentinhaber: Deutsche Edelstahlwerke Specialty Steel GmbH & Co. KG, 58452 Witten (DE)
(72) Erfinder: van Soest, Frank, 47918 Tönisvorst (DE); Krull, Hans-Günter, 47506 Neukirchen-Vluyn (DE)
(74) Vertreter: Cohausz & Florack

(56) Entgegenhaltungen:
- EP-A1- 0 257 262
- EP-A1- 1 870 483
- EP-A1- 3 050 649
- EP-A1- 3 392 354

## Beschreibung

Die Erfindung betrifft die Verwendung eines Stahlpulvers für die Herstellung von Bauteilen durch ein additives Fertigungsverfahren, bei dem das Stahlpulver mittels selektiver Wärmezufuhr verfestigt wird.

Des Weiteren betrifft die Erfindung ein Verfahren, mit dem unter Anwendung eines additiven Fertigungsverfahrens aus einem Stahlpulver ein Bauteil hergestellt wird.

Unter dem Begriff "additive Fertigungsverfahren" werden hier alle Herstellverfahren zusammengefasst, bei denen ein Werkstoff zur Erzeugung eines Bauteils hinzugefügt wird. Dabei erfolgt dieses Hinzufügen in der Regel schichtweise. "Additive Herstellverfahren", die in der Fachsprache oft auch als "generative Verfahren" oder auch allgemein als "3D-Drucken" bezeichnet werden, stehen damit im Gegensatz zu den klassischen subtraktiven Fertigungsverfahren, wie den spanenden Verfahren (z.B. Fräsen, Bohren und Drehen), bei denen Material abgetragen wird, um dem jeweils herzustellenden Bauteil seine Form zu verleihen.

Das additive Fertigungsprinzip ermöglicht es, geometrisch komplexe Strukturen herzustellen, die mit konventionellen Fertigungsverfahren, wie den schon genannten spanabhebenden Verfahren oder Urformverfahren (Gießen, Schmieden), nicht oder nur aufwendig realisiert werden können (s. VDI Statusreport "Additive Fertigungsverfahren", September 2014, herausgegeben vom Verein Deutscher Ingenieure e.V., Fachbereich Produktionstechnik und Fertigungsverfahren, www.vdi.de/statusadditiv).

Nähere Definitionen der Verfahren, die unter dem Oberbegriff "Additive Verfahren" zusammengefasst sind, finden sich beispielsweise in den VDI-Richtlinien 3404 und 3405.

Die durch derartige additive Verfahren erzeugten Bauteile werden regelmäßig einer Nachbehandlung unterzogen, um die in ihnen üblicherweise herstellungsbedingt noch vorhandene Restporosität auf ein Minimum zu reduzieren. Die hierzu zur Verfügung stehenden Möglichkeiten sind im Stand der Technik hinlänglich beschrieben und beispielsweise in der DE 100 39 143 C1 zusammengefasst. Gegenstand dieser Patentschrift ist ein Verfahren zur Herstellung präziser Bauteile durch Lasersintern eines Pulvermaterials, das aus einer Mischung von mindestens zwei Pulverelementen besteht. Das Pulvermaterial ist durch den Hauptbestandteil Eisenpulver und weitere Pulverlegierungselemente gebildet, die in elementarer, vorlegierter oder teilweise vorlegierter Form vorliegen. Gleichzeitig ist der Lasersinterprozess so gesteuert, dass im Verlaufe des Lasersinterprozesses aus den Bestandteilen des Pulvers eine Pulverlegierung entsteht. Bei den Pulverlegierungselementen handelt es sich um Kohlenstoff, Silizium, Kupfer, Zinn, Nickel, Molybdän, Mangan, Chrom, Kobalt, Wolfram, Vanadium, Titan, Phosphor, Bor. Konkret betragen die für diese Bestandteile angegebenen Gehaltsspannen: C: 0,01 - 2 Gew.-%, Si: bis zu 1 Gew.-%, Cu: bis zu 10 Gew.-%, Sn: bis zu 2 Gew.-%, Ni: bis zu 10 Gew.-%, Mo: bis zu 6 Gew.-%, Mn: bis zu 2 Gew.-% oder 10 - 13 Gew.-%, Cr: bis zu 5 Gew.-% oder 12 - 18 Gew.-%, Co: bis zu 2 Gew.-%, W: bis zu 5 Gew.- %, V: bis zu 1 Gew.-%, Ti: bis zu 0,5 Gew.-%, P: bis zu 1 Gew.-%, B: bis zu 1 Gew.-%.

Neben dem voranstehend erläuterten Stand der Technik ist aus der EP 3 392 354 A1 ein als Pulver für die additive Fertigung vorgesehene Stahllegierung bekannt, die (in Gew.-%) 0,05 - 0,25 % C, 0,01 - 1,00 % Si, 0,4 - 1,8 % Mn, 0,05 - 0,80 % Mo, 0,0002 - 0,3 % S, 0,3 - 1,50 % Al, bis zu 0,0050 % B, 0,3 - 1,8 % Cu, 0,05 - 3,20 % Cr und 2,0 - 3,9 % Ni sowie als Rest Eisen und unvermeidbare Verunreinigungen enthält.

In der Praxis kommen heute Pulver aus Stahllegierungen zum Einsatz, die aufgrund ihrer unter 0,30 Gew.-% liegenden Kohlenstoffgehalte eine ausreichende Schweißeignung besitzen. Das jeweils bereitgestellte Stahlpulver wird dann mit einem Elektronen- oder Laserstrahl in einem Vakuum aufgeschmolzen und aufgrund der kleinen flüssigen Menge gegenüber dem schon erzeugten Bauteil rasch abgekühlt. Durch die hohe Abkühlrate stellt sich häufig ein kritischer Spannungszustand im Bauteil ein, der insbesondere bei erhöhten Kohlenstoffgehalten zu Rissen führen kann. Um die Gefahr von Spannungsrissen zu minimieren, ist es sinnvoll, einen Stahl zu verwenden, der bei rascher Abkühlung einen möglichst weichen Gefügezustand bildet. Hier bieten sich Stähle an, die ein aus Weichmartensit oder Lanzettmartensit bestehendes Gefüge bilden. Beispiele für solche Stähle sind die so genannten "Maraging-Stähle". Typische Exemplare dieser Stähle sind unter den Werkstoffnummern 1.2709, 1.6355, 1.4545 und 1.4542 in der StahlEisen-Liste genormt. Nachteilig an diesen Stählen ist, dass sie in hohen Gehalten Legierungsbestanteile erfordern, die heute nur zu hohen Kosten erhältlich sind.

Vor diesem Hintergrund hat sich die Aufgabe ergeben, ein für die Herstellung von Bauteilen durch ein additives Fertigungsverfahren geeignetes Stahlpulver zu nennen, das kostengünstig legierbar ist und es erlaubt, Bauteile zu fertigen, die sich durch eine geringe Neigung zur Bildung von Spannungsrissen auszeichnen.

Des Weiteren sollte ein auf einem solchen Stahlpulver aufsetzendes Verfahren genannt werden, dass die zuverlässige Herstellung von Bauteilen durch Anwendung eines additiven Fertigungsverfahrens erlaubt.

In Bezug auf das kostengünstig legierbare Stahlpulver schlägt die Erfindung für die Herstellung von Bauteilen in einem additiven Fertigungsverfahren die Verwendung eines gemäß Anspruch 1 legierten Stahlpulvers vor.

Ein die voranstehend genannte Aufgabe erfindungsgemäß lösendes Verfahren ist in Anspruch 9 angegeben.

Vorteilhafte Ausgestaltungen der Erfindung sind in den abhängigen Ansprüchen angegeben und werden nachfolgend wie der allgemeine Erfindungsgedanke im Einzelnen erläutert.

Die Erfindung schlägt demnach für die Herstellung von Bauteilen durch ein additives Fertigungsverfahren, bei dem das Stahlpulver mittels selektiver Wärmezufuhr verfestigt wird, um das herzustellende Bauteil abzubilden, die Verwendung eines Stahlpulvers vor, das folgende Zusammensetzung aufweist (in Gew.-%):

| | |
|---|---|
| C: | 0 - 0,1 % |
| Si: | ≤ 1,5% |
| Mn: | 9,0 -15,0 % |
| Mo: | 0,01 - 3,0% |
| N: | 0,004 - 0,020 % |
| S: | ≤ 0,40 % |
| AI: | 0,004 - 10,0 % |
| B: | < 0,0025 % |
| Nb: | ≤ 0,25 % |
| Ti: | ≤ 1,8 % |
| V: | ≤ 1,0 % |
| Cu: | ≤ 2,0 % |
| Cr: | ≤ 5,0 % |

optional Ni mit der Maßgabe, dass der Ni-Gehalt 0,5 - 4,0 % beträgt, wobei für den gemäß der Formel Z = 5 * %Ni + %Cr + 5 * %Mo aus dem jeweiligen Mo-Gehalt %Mo, dem jeweils vorhandenen Ni-Gehalt %Ni
und/oder dem jeweils vorhandenen Cr-Gehalt %Cr des Stahlpulvers gebildeten Wert "Z" gilt Z < 35 Gew.-%,
Rest Eisen und herstellungsbedingt unvermeidbare Verunreinigungen.

Die Legierungsvorschrift, die die Erfindung für das erfindungsgemäß zu verwendende Stahlpulver vorgesehen hat, ist so abgestimmt, dass sie neben Stahllegierungen, die nach einer raschen Abkühlung aus dem schmelzflüssigen Zustand ein weichmartensitisches Gefüge bilden, auch solche Stahllegierungen umfasst, die nach der Abkühlung Gefüge mit hohen Ferritanteilen als weiche Phase besitzen.

Gleichzeitig ist ein erfindungsgemäß zu verwendendes Stahlpulver so zusammengesetzt, dass in Fällen, in denen besonders hohe Festigkeiten von den aus erfindungsgemäß verwendetem Stahlpulver gefertigten Bauteilen gefordert werden, diese Festigkeiten durch eine Wärmebehandlung eingestellt werden können, der das Bauteil nach seiner Herstellung unterzogen wird. In Folge der Wärmebehandlung bilden sich festigkeitssteigernde Ausscheidungen von intermetallischen Phasen, wie Heusler-Phasen, Eta-Phasen und/oder Laves-Phasen, die von geringen Mengen an feinverteilten Karbiden, Nitriden oder Karbonitriden begleitet sein können.

Ein erfindungsgemäßes Verfahren zur Herstellung eines Stahlbauteils umfasst folglich folgende Arbeitsschritte:
a) Erschmelzen einer Stahlschmelze mit folgender Zusammensetzung (in Gew.-): C: 0 - 0,1 % , Si: ≤ 1,5 % Mn: 9,0 - 15,0 %, Mo: 0,01 - 3,0 %, N: 0,004 - 0,020 %, S: ≤ 0,40 %, AI: 0,004 - 10,0 %, B: < 0,0025 %, Nb: ≤ 0,25 %, Ti: ≤ 1,8 %, V: ≤ 1,0 %, Cu: ≤ 2,0 %, Cr: ≤ 5,0 % sowie optional Ni mit der Maßgabe, dass der Ni-Gehalt 0,5 - 4,0 %, wobei für den gemäß der Formel Z = 5 * %Ni + %Cr + 5 * %Mo aus dem jeweiligen Mo-Gehalt %Mo, dem jeweils vorhandenen Ni-Gehalt %Ni und/oder dem jeweils vorhandenen Cr-Gehalt % des Stahlpulvers gebildeten Wert "Z" gilt Z < 35 Gew.-%, Rest Eisen und herstellungsbedingt unvermeidbare Verunreinigungen;
b) Erzeugen eines Stahlpulvers aus der im Arbeitsschritt a) erschmolzenen Stahlschmelze;
c) Herstellen des Bauteils durch ein additives Fertigungsverfahrens,
   c.1)bei dem mindestens eine Portion des Stahlpulvers volumenabschnittsweise einer zeitlich begrenzten Wärmezufuhr mit anschließender Abkühlung ausgesetzt wird, so dass die Stahlpulverpartikel, die im erwärmten Volumenabschnitt vorhanden sind und jeweils aneinander angrenzen, eine stoffschlüssige Verbindung eingehen und nach der Abkühlung zu mindestens einem Volumenabschnitt des herzustellenden Bauteils verfestigt sind;
   c.2)bedarfsweise erneutes Auftragen einer weiteren Portion des Stahlpulvers auf den im Arbeitsschritt c.1) verfestigten Volumenabschnitt und Wiederholen des Arbeitsschritts c.1) mit der weiteren Portion des Stahlpulvers, wobei die Arbeitsschritte c.1) und c.2) wiederholt werden, bis das herzustellende Bauteil vollständig fertig geformt ist;
d) optionales formgebendes Bearbeiten der Bauteile;
e) optionales abschließendes Wärmebehandeln des erhaltenen Bauteils zur Bildung von festigkeitssteigernden Ausscheidungen im Gefüge des Bauteils, wobei die optionale Wärmebehandlung als Auslagerung durchgeführt wird, bei der das Bauteil über eine Dauer von 0,5 - 60 Stunden bei einer Temperatur von 400 - 700 °C gehalten wird.

Den einzelnen in der Legierung des für die erfindungsgemäße Verwendung von der Erfindung vorgesehenen Stahlpulvers kommen dabei folgende Bedeutungen zu: Kohlenstoff "C" wird einem erfindungsgemäß verwendeten Stahlpulver nicht gezielt zugegeben, kann aber im erfindungsgemäß verwendeten Stahlpulver in Gehalten von bis zu 0,1 Gew.-% vorhanden sein. Es wird in der Regel über andere Legierungselemente unvermeidbar in den metallurgischen Prozess als Verunreinigung eingebracht. Dabei ist der C-Gehalt auf höchstens 0,1 Gew.-% beschränkt, um eine optimale Schweißbarkeit zu sichern. Negative Einflüsse der Anwesenheit von C im erfindungsgemäß verwendeten Stahlpulver lassen sich dadurch sicher vermeiden, dass der C-Gehalt auf höchstens 0,04 Gew.-%, insbesondere höchstens 0,02 Gew.-%, beschränkt wird.

Silizium "Si" kann im erfindungsgemäß verwendeten Stahlpulver in Gehalten von bis zu 1,5 Gew.-% vorgesehen sein, um eine Mischkristallverfestigung oder eine Beteiligung an der Ausbildung von intermetallischen Phasen zu erreichen. Dabei ist der Si-Gehalt auf höchstens 1,5 Gew.-% beschränkt, um Probleme aufgrund einer sich daraus ergebenden zu hohen Bildungstemperatur von intermetallischen Phasen zu vermeiden. Um die günstigen Einflüsse von Si sicher nutzen können, kann ein Si-Gehalt von mindestens 0,1 Gew.-%, insbesondere mindestens 0,5 Gew.-%, vorhanden sein. Negative Einflüsse der Anwesenheit von Si im erfindungsgemäß verwendeten Stahlpulver lassen sich dadurch sicher vermeiden, dass der Si-Gehalt auf höchstens 1,0 Gew.-%, insbesondere höchstens 0,8 Gew.-%, beschränkt wird.

Die für Mangan "Mn" im erfindungsgemäßen Stahlpulver vorgesehenen Gehalte von 9,0 - 15,0 Gew.-% sind so gewählt, dass sie die Möglichkeit umfassen, teilweise durch die Zugabe hoher Mn-Gehalte die in den oben genannten konventionellen Ni-haltigen Maraging-Stählen üblicherweise vorgesehenen hohen Gehalte an dem heute nur zu hohen Kosten erhältlichen Legierungselement Nickel "Ni" zu substituieren. Indem hohe Mn-Gehalte vorgesehen werden, lässt sich im erfindungsgemäß erzeugten Bauteil ein weichmartensitisches Gefüge auf Manganbasis erhalten. So lässt sich durch einen Mn-Gehalt von mindestens 9,0

Gew.-% sicherstellen, dass sich die von den Ni-haltigen Maragingstählen bekannte Umwandlungshysterese auch bei einem erfindungsgemäß legierten Stahlpulver einstellt. Besonders effektiv lässt sich dieser Effekt erreichen, wenn der Mn-Gehalt höchstens 12 Gew.-% beträgt.

Molybdän "Mo" ist im erfindungsgemäß zu verwendenden Stahlpulver in Gehalten von 0,01 - 3,0 Gew.-% vorhanden, um durch Ausscheidung von Mo-haltigen intermetallischen Phasen zur Ausscheidungshärtung beizutragen oder die Bildung anderer intermetallischer Phasen zu begünstigen. Hierzu ist ein Mindestgehalt von 0,01 Gew.-% Mo vorgesehen, um zumindest eine Begünstigung der Ausscheidung von intermetallischen Phasen zu erreichen. Besonders sicher lassen sich die positiven Einflüsse auf die Eigenschaften des aus erfindungsgemäßem Stahlpulver erzeugten Bauteils dadurch nutzen, dass der Mo-Gehalt auf mindestens 0,3 Gew.-% eingestellt wird. Bei Überschreiten der Obergrenze von 3,0 Gew.-% wird keine weitere wirtschaftlich sinnvolle Steigerung der positiven Einflüsse von Mo erzielt. Besonders effektiv lässt sich die Wirkung von Mo nutzen, wenn der Mo-Gehalt auf höchstens 1,5 Gew.-% beschränkt ist.

Stickstoff "N" ist im erfindungsgemäß verwendeten Stahlpulver in Gehalten von 0,004 - 0,020 Gew.-% vorhanden, um die Bildung von Nitriden zu ermöglichen. Hierzu ist ein Mindestgehalt von 0,004 Gew.-% erforderlich. Überschreitet der N-Gehalt jedoch 0,020 Gew.-%, so kann es zur Bildung grober Nitride schon aus der flüssigen Phase kommen. Um dies sicher zu vermeiden, kann der N-Gehalt auf höchstens 0,012 Gew.-% beschränkt werden.

Schwefel "S" ist ein an sich unerwünschter Bestandteil im erfindungsgemäß verwendeten Stahlpulver, gelangt aber herstellungsbedingt als unvermeidbare Verunreinigung in den Stahl. Es kann aber auch zum Erzielen einer verbesserten Zerspanbarkeit gezielt zugesetzt werden. Um negative Einflüsse auf die Eigenschaften von aus erfindungsgemäß verwendetem Stahlpulver erzeugten Bauteilen zu vermeiden, ist der S-Gehalt auf höchstens 0,40 Gew.-%, insbesondere höchstens 0,01 Gew.-%, beschränkt.

Aluminium "Al" ist im erfindungsgemäßen Stahlpulver in Gehalten von 0,004 - 10,0 Gew.-% vorhanden. Ein Mindestgehalt von 0,004 Gew.-% ist dabei erforderlich, um bei der Erzeugung des Stahlpulvers eine wirksame Desoxidation erzielen zu können. Höhere Gehalte an Al können zudem vorgesehen sein, um die Ausprägung eines rein ferritischen Gefüges zu unterstützen, indem die Austenitbildung unterdrückt wird. Hierzu können Al-Gehalte von mindestens 4 Gew.-%, insbesondere mindestens 5 Gew.-%, vorgesehen werden. Noch höhere Gehalte an Al von typischerweise mindestens 7 Gew.-% können zudem in der Legierung des erfindungsgemäß verwendeten Stahlpulvers vorhanden sein, um die Dichte des Stahlpulvers und damit das Gewicht des aus ihm erzeugten Bauteils zu reduzieren. Die höheren Al-Gehalte von mindestens 4 Gew.-%, insbesondere mindestens 5 Gew.-%, erweisen sich dabei insbesondere dann als vorteilhaft, wenn sie, wie weiter unten erläutert, in Kombination mit Ti-Gehalten von mindestens 0,5 Gew.-% auftreten.

Bor "B" kann optional im erfindungsgemäßen Stahlpulver vorhanden sein, um versprödend wirkende Ausscheidungen auf den Korngrenzen zu vermeiden. Dieser Effekt kann insbesondere bei B-Gehalten von mindestens 0,0010 Gew.-% erzielt werden. Dabei sollte der B-Gehalt unterhalb von 0,0025 Gew.-% gehalten werden, um eine Versprödung durch grobe Borphasen zu vermeiden.

Niob "Nb" kann optional im erfindungsgemäß verwendeten Stahlpulver in Gehalten von bis zu 0,25 Gew.-% vorhanden sein, um als Mikrolegierungselement durch die Bildung von Ausscheidungen die Festigkeit des erfindungsgemäß erzeugten Bauteils zu unterstützen. Damit diese Wirkung sicher eintritt, kann ein Mindestgehalt an Nb von 0,03 Gew.-%, insbesondere von 0,05 Gew.-%, vorgesehen werden. Bei Nb-Gehalten von mehr als 0,25 Gew.-% tritt keine weitere Steigerung der positiven Einflüsse der Anwesenheit von Nb ein. Besonders effektiv lässt sich die Anwesenheit von Nb im erfindungsgemäß verwendeten Stahlpulver und dem daraus erzeugten Bauteil nutzen, wenn der Nb-Gehalt höchstens 0,15 Gew.-% beträgt.

Titan "Ti" kann optional im erfindungsgemäß verwendeten Stahlpulver in Gehalten von bis zu 1,8 Gew.-% vorhanden sein, um insbesondere, wie oben bereits erwähnt, in Kombination mit höheren Gehalten an Al im Stahlpulver und dem aus ihm erzeugten Bauteil die Ausprägung eines rein ferritischen, unter Umgehung einer Austenit/Ferrit-Umwandlung gebildeten Gefüges zu unterstützen. Zweckmäßigerweise beträgt hierzu der Ti-Gehalt mindestens 0,5 Gew.-%, insbesondere mindestens 0,75 Gew.-%. Jedoch trägt die Anwesenheit von Ti auch bei aus erfindungsgemäß verwendetem Stahlpulver erzeugten, ein überwiegend oder rein martensitisches Gefüge aufweisenden Bauteilen zur Bildung intermetallischer Phasen bei. Zu diesem Zweck kann der Ti-Gehalt des erfindungsgemäß verwendeten Stahlpulvers auf mindestens 0,5 Gew.-% angehoben werden. Bei zu hohen Gehalten an Ti kann es jedoch im Zuge der Abkühlung nach der Erzeugung oder der optional durchgeführten Wärmebehandlung zu Rissbildung im aus erfindungsgemäß verwendetem Stahlpulver gefertigten Bauteil kommen. Daher ist der Ti-Gehalt erfindungsgemäß auf höchstens 1,8 Gew.-%, insbesondere höchstens 1,25 Gew.-%, beschränkt.

Vanadium "V" kann optional im erfindungsgemäß verwendeten Stahlpulver in Gehalten von bis zu 1,0 Gew.-% vorhanden sein, um als Mikrolegierungselement durch die Bildung von Ausscheidungen die Festigkeit des erfindungsgemäß erzeugten Bauteils zu unterstützen. Damit diese Wirkung sicher eintritt, kann ein Mindestgehalt an V von 0,10 Gew.-% vorgesehen werden. Bei V-Gehalten von mehr als 1,0 Gew.-% tritt keine weitere Steigerung der positiven Einflüsse der Anwesenheit von V ein. Besonders effektiv lässt sich die Anwesenheit von V im erfindungsgemäß verwendeten Stahlpulver und dem daraus erzeugten Bauteil nutzen, wenn der V-Gehalt höchstens 0,25 Gew.-% beträgt.

Kupfer "Cu" kann optional im erfindungsgemäß verwendeten Stahlpulver in Gehalten von bis zu 2,0 Gew.-% vorhanden sein, um durch Bildung von Cu-Ausscheidungen zur Steigerung der Härte beizutragen. Damit diese Wirkung sicher eintritt, kann ein Mindestgehalt an Cu von 0,2 Gew.-%, insbesondere 0,3 Gew.-%, vorgesehen werden. Bei Cu-Gehalten von mehr als 2,0 Gew.-% besteht dagegen die Gefahr, dass bei der Warmumformung Risse unvermeidbar sind. Besonders effektiv lässt sich die Anwesenheit von Cu im erfindungsgemäß verwendeten Stahlpulver und dem daraus erzeugten Bauteil nutzen, wenn der Cu-Gehalt höchstens 0,5 Gew.-% beträgt.

Neben Al ist mindestens eines der Legierungselemente "Ni" und "Mn" im erfindungsgemäß verwendeten Stahlpulver vorhanden, um durch Ausscheidungshärtung die jeweils geforderte Härte des aus dem Stahlpulver erzeugten Bauteils einzustellen. Dabei sind die Gehalte an Ni, Al und Mn im erfindungsgemäß verwendeten Stahlpulver jeweils so aufeinander abgestimmt, dass bei möglichst geringen Gehalten insbesondere an Ni optimale Festigkeitseigenschaften erzielt werden.

Um die Legierungskosten im erfindungsgemäßen Stahl zu begrenzen, hat die Erfindung den Wert Z = 5 * %Ni + %Cr + 5 * %Mo definiert, der unterhalb von 35 Gew.-% liegen soll, wobei in der Formel zur Berechnung des Wertes Z mit "%Ni" der jeweilige Ni-Gehalt, mit %Mo der jeweilige Mo-Gehalt und mit "%Cr" der jeweilige Cr-Gehalt des Stahlpulvers bezeichnet ist.

Nickel "Ni" kann dabei im erfindungsgemäß verwendeten Stahlpulver vorhanden sein, um insbesondere bei den von der erfindungsgemäß vorgegebenen Legierungsvorschrift umfassten Zusammensetzungen, die zu einem überwiegend oder ausschließlich weichmartensitischen Gefüge führen, die für die jeweils geforderte Festigkeit notwendige Aushärtbarkeit zu gewährleisten. Um diese Wirkung zu erzielen, kann der Ni-Gehalt des erfindungsgemäß verwendeten Stahlpulvers auf mindestens 0,5 Gew.-% festgelegt werden. Dabei lässt sich die Anwesenheit von Ni im erfindungsgemäßen Stahlpulver und dem daraus erzeugten Bauteil dann besonders effektiv nutzen, wenn der Ni-Gehalt auf höchstens 2,5 Gew.-% beschränkt wird.

Cr kann im erfindungsgemäß verwendeten Stahlpulver in Gehalten von bis zu 5 Gew.-%, insbesondere bis zu 4 Gew.-%, vorhanden sein, um die Eigenschaften eines erfindungsgemäß verwendeten Stahlpulvers im Hinblick auf die erfindungsgemäß vorgesehenen Anwendungen von aus erfindungsgemäßem Stahlflachprodukt erzeugten Bauteilen zu optimieren.

Der nicht von den voranstehend erläuterten Legierungselementen abgedeckte Rest der Zusammensetzung eines erfindungsgemäß verwendeten Stahlpulvers wird von Eisen und den herstellungsbedingt unvermeidbaren Verunreinigungen eingenommen, wobei die Gehalte an den Verunreinigungen jeweils in einem so niedrigen Bereich liegen, dass sie im Hinblick auf die angestrebten Eigenschaften des erfindungsgemäß verwendeten Stahlpulvers und der daraus hergestellten Bauteile keinen Einfluss haben.

Die Herstellung des erfindungsgemäß verwendeten Stahlpulvers kann in konventioneller Weise beispielsweise durch Gasverdüsen oder jedes andere geeignete Verfahren erfolgen. Hierzu kann eine nach Maßgabe der Erfindung zusammengesetzte Stahlschmelze (Arbeitsschritt a) des erfindungsgemäßen Verfahrens) beispielsweise durch Gas- oder Wasserverdüsen oder eine Kombination aus diesen beiden Verdüsungsverfahren zu dem Stahlpulver zerstäubt werden (Arbeitsschritt b) des erfindungsgemäßen Verfahrens). Erforderlichenfalls werden aus den so erhaltenen Pulverpartikeln für die erfindungsgemäße Weiterverarbeitung durch Sieben diejenigen selektiert, die eine geeignete Korngröße besitzen. Hier haben sich Körner mit einem mittleren Durchmesser von weniger als 500 µm als brauchbar erwiesen, wobei sich mittlere Korngrößen von weniger als 250 µm, insbesondere von weniger als 150 µm, als besonders geeignet herausgestellt haben.

Wie voranstehend erläutert, kann durch Einstellung der Legierung des erfindungsgemäß verwendeten Stahlpulvers das Gefüge des erfindungsgemäß erzeugten Bauteils bestimmt werden. Hierbei hat es sich im Fall, dass ein weichmartensitisches Gefüge gewünscht wird, als vorteilhaft herausgestellt, wenn das Gefüge aus Lanzettmartensit besteht, der in der Fachsprache auch Latten-, Block- oder kohlenstoffarmer Massivmartensit genannt wird. Die Form des Martensits besteht aus einem nahezu kubischen Gitter mit einer gegenüber einem tetragonalen Gitter verbesserten Duktilität.

Das erfindungsgemäß verwendete Stahlpulver eignet sich für jedes additive Fertigungsverfahren der eingangs erläuterten, aus dem Stand der Technik bekannten Art, bei dem es durch lokale Wärmezufuhr zum Verschmelzen der aneinander angrenzenden, von der zugeführten Wärme erfassten Partikel und damit einhergehend bei der anschließenden Abkühlung zur Verfestigung der so behandelten Stahlpulverportion im jeweils abzubildenden Abschnitt des zu erzeugenden Bauteils kommt. Insbesondere eignen sich für die erfindungsgemäße Bauteilerzeugung die bekannten Laserschmelz- und Lasersinterverfahren, welche ein präzise begrenztes, intensives Erwärmen der Stahlpulverpartikel und eine entsprechend exakte Abbildung des herzustellenden Bauteils erlauben.

Typischerweise beträgt die Zugfestigkeit Rm der nach dem Arbeitsschritt c) des erfindungsgemäßen Verfahrens erhaltenen Bauteile vor der optional abschließend durchgeführten Wärmebehandlung mindestens 600 MPa, wobei regelmäßig Zugfestigkeiten von bis zu 1300 MPa erreicht werden.

Aufgrund ihrer vergleichbar geringen Festigkeit lassen sich die erhaltenen, erfindungsgemäß erzeugten Bauteile in diesem Zustand optimal bearbeiten, beispielsweise durch spanabhebende Verfahren, um sie in ihre Endform zu bringen (Arbeitsschritt d)).

Durch die optional abschließende Wärmebehandlung (Arbeitsschritt e)) lässt sich die Härte und damit einhergehend die Zugfestigkeit erfindungsgemäß erzeugter Bauteile deutlich steigern. So lässt sich die Härte der Bauteile regelmäßig um mindestens 5 HRC (Härte HRC bestimmt gemäß aktuell gültiger DIN EN ISO 6508) steigern. Dies entspricht einer regelmäßigen Zunahme der Zugfestigkeit Rm um 100 MPa (Zugfestigkeit Rm bestimmt gemäß DIN EN ISO 6892-1).

Als geeignete Wärmebehandlung können die Bauteile einer Auslagerung unterzogen werden, bei der sie über eine Dauer von 0,5 - 60 Stunden bei einer Temperatur von 400 - 700 °C gehalten werden.

Die nach dem optional durchgeführten Wärmebehandlungsschritt e) erhaltenen, erfindungsgemäß erzeugten Bauteile weisen typischerweise Zugfestigkeiten von mindestens 1000 MPa, insbesondere mindestens 1100 MPa, auf, wobei hier die Obergrenze der erreichten Zugfestigkeiten Rm typischerweise bei 1450 MPa liegt.

Nachfolgend wird die Erfindung anhand von Ausführungsbeispielen näher erläutert.

Es sind sieben Schmelzen S1 - S7 erschmolzen worden, deren Zusammensetzung in Tabelle 1 angegeben ist.

Zusätzlich ist in Tabelle 1 der jeweils für die Schmelzen S1 - S7 in der oben erläuterten Weise berechnete Wert "Z" angegeben.

Die Schmelzen S1 - S7 sind in konventioneller Weise im Gasstrom zu Stahlpulvern verdüst worden, bei denen die mittlere Korngröße der Partikel 10 - 250 µm betrug.

Aus den erhaltenen Stahlpulvern ist durch Anwendung eines konventionellen additiven Fertigungsverfahrens Selective Laser Melting ("3D-Druck / SLM-Verfahren", siehe https://de.wikipedia.org/wiki/ Selektives_Laserschmelzen) jeweils ein Bauteil erzeugt worden, bei dem es sich beispielsweise um Hydraulikverteiler handelte.

Die Zugfestigkeit Rm_V der nach der additiven Fertigung erhaltenen Bauteile ist in Tabelle 2 genannt.

Die so beschaffenen Bauteile sind einer spanabhebenden Bearbeitung unterzogen worden, um sie an die von ihnen jeweils geforderte Endform optimal anzupassen. Im Zuge dieser spanabhebenden Bearbeitung sind beispielsweise Gewinde für Montagezwecke in das Bauteil eingebracht worden.

Anschließend haben die Bauteile jeweils eine Wärmebehandlung durchlaufen, bei der sie für eine Dauer tA bei einer Temperatur TA ausgelagert worden sind. Auch die jeweilige Auslagerungsdauer tA und Auslagerungstemperatur TA sind in Tabelle 2 genannt.

Ebenso sind in Tabelle 2 die Zugfestigkeiten Rm_N genannt, die die Bauteile nach dem Bearbeiten und dem Auslagern aufwiesen.

Zusätzlich sind in Tabelle 2 auch das Gefüge der Bauteile und die darin enthaltenen, die Ausscheidungshärtung bewirkenden Phasen genannt. Beim aus der nicht erfindungsgemäßen Stahlschmelze S6 erzeugten Beispiel zeigte sich, dass nach der additiven Erzeugung des Bauteils bereits Ausscheidungen im Bauteil vorlagen, die trotz der hohen Abkühlgeschwindigkeit, mit der die Bauteile nach der additiven Erzeugung abgekühlt worden sind, nicht unterdrückt werden konnten. In Folge dessen lagen nach der additiven Fertigung massive Risse im Bauteil vor. Folgerichtig konnte auch durch die anschließend dennoch durchgeführte Auslagerung keine Festigkeitssteigerung erzielt werden.

Mit der Erfindung steht somit ein für die Herstellung von Bauteilen durch ein additives Fertigungsverfahren, bei dem das Stahlpulver mittels selektiver Wärmezufuhr verfestigt wird, um das herzustellende Bauteil abzubilden, geeignetes Stahlpulver zur Verfügung, das kostengünstig legierbar ist.

**Tabelle 1**

| **Schmelze:** | **S1** | **S2** | **S3** | **S4** | **S5** | **S6** | **S7** |
|---|---|---|---|---|---|---|---|
| C | 0,02 | 0,002 | 0,003 | 0,005 | 0,01 | 0,05 | 0,01 |
| Si | 0,5 | 0,05 | 0,44 | 0,1 | 0,5 | 0,3 | 0,5 |
| Mn | 12,1 | 12,5 | 11,2 | 11,8 | 0,52 | 0,23 | 0,52 |
| Mo | 1 | 0,3 | 0,1 | 0,3 | 0,03 | 0,03 | 2 |
| Ni | 2 | 3 | 2,1 | 2,5 | 0,02 | 0,02 | 0,02 |
| Al | 0,2 | 1 | 0,04 | 0,8 | 8,1 | 9,1 | 8 |
| Ti | 1,2 | 1,1 | 1,5 | 1,5 | 1,05 | 2,25 | 0,7 |
| Cu | - | - | 0,5 | - | - | - | - |
| Cr | - | - | - | - | - | - | 3,6 |
| Co | - | - | - | - | - | - | - |
| N | 0,008 | 0,010 | 0,009 | 0,011 | 0,009 | 0,007 | 0,004 |
| s | - | - | - | - | - | - | - |
| B | - | - | - | - | - | - | - |
| Nb | - | - | - | - | - | - | - |
| V | - | - | - | - | - | - | - |
| Z | 15 | 16,5 | 11 | 14 | 0,25 | 0,25 | 13,7 |
| Erfindungsgemäß? | JA | JA | JA | JA | NEIN | NEIN | NEIN |
| Angaben in Gew.-%, Rest Eisen und unvermeidbare Verunreinigungen | | | | | | | |

**Tabelle 2**

| **Schmelze** | **Rm_V** | **tA** | **TA** | **Rm_N** | **Ausscheidungshärtung über** | **Matrixgefüge** | **Erfindungsgemäß?** |
|---|---|---|---|---|---|---|---|
| | **[MPa]** | **[h]** | **[°C]** | **[MPa]** | | | |
| S1 | 980 | 12 | 460 | 1245 | Laves-Phase | Lanzettmartensit | JA |
| S2 | 930 | 12 | 450 | 1425 | Heusler- und Laves-Phasen | Lanzettmartensit | JA |
| S3 | 950 | 12 | 450 | 1385 | Laves-Phasen, Cu-Ausscheidungen | Lanzettmartensit | JA |
| S4 | 960 | 12 | 450 | 1530 | Heusler- und Laves-Phasen | Lanzettmartensit | JA |
| S5 | 990 | 1 | 600 | 1290 | Laves-Phase | Ferrit | NEIN |
| S6 | 1320 | 1 | 600 | 1320 | Laves-Phase | Ferrit | NEIN |
| S7 | 990 | 1 | 600 | 1290 | Laves-Phase (Cr- und Mo-haltig) | Ferrit | NEIN |

## Patentansprüche

1. Verwendung eines Stahlpulvers für die Herstellung von Bauteilen durch ein additives Fertigungsverfahren, bei dem das Stahlpulver mittels selektiver Wärmezufuhr verfestigt wird, um das herzustellende Bauteil abzubilden, wobei das Stahlpulver folgende Zusammensetzung aufweist (in Gew.-%):
| | | |
|---|---|---|
| C: | 0 | - 0,1 % |
| Si: | | ≤ 1,5% |
| Mn: | | 119,0 - 15,0 % |
| Mo: | 0,01 | - 3,0% |
| N: | 0,004 | - 0,020 % |
| S: | | ≤ 0,40 % |
| AI: | 0,004 | - 10,0 % |
| B: | | < 0,0025 % |
| Nb: | | ≤ 0,25 % |
| Ti: | | ≤ 1,8 % |
| V: | | ≤ 1,0 % |
| Cu: | | ≤ 2,0 % |
| Cr: | | ≤ 5,0 % |
sowie optional Ni mit der Maßgabe, dass der Ni-Gehalt 0,5 - 4,0 % beträgt, wobei für den gemäß der Formel Z = 5 * %Ni + %Cr + 5 * %Mo aus dem jeweiligen Mo-Gehalt %Mo, dem jeweils vorhandenen Ni-Gehalt %Ni und/oder dem jeweils vorhandenen Cr-Gehalt %Cr des Stahlpulvers gebildeten Wert "Z" gilt Z < 35 Gew.-%,
Rest Eisen und herstellungsbedingt unvermeidbare Verunreinigungen.

2. Verwendung nach Anspruch 1, **dadurch gekennzeichnet, dass** der Mn-Gehalt des Stahlpulvers 9,0 - 12,0 Gew.-% beträgt.

3. Verwendung nach einem der voranstehenden Ansprüche, **dadurch gekennzeichnet, dass** der Al-Gehalt des Stahlpulvers mindestens 4,0 Gew.-% beträgt.

4. Verwendung nach einem der voranstehenden Ansprüche, **dadurch gekennzeichnet, dass** der Ni-Gehalt des Stahlpulvers 0,5 - 2,5 Gew.-% beträgt.

5. Verwendung nach einem der voranstehenden Ansprüche, **dadurch gekennzeichnet, dass** der Wert "Z" höchstens 20 Gew.-% beträgt.

6. Verwendung nach Anspruch 5, **dadurch gekennzeichnet, dass** der Wert "Z" höchstens 15 Gew.-% beträgt.

7. Verwendung nach einem der voranstehenden Ansprüche, **dadurch gekennzeichnet, dass** die mittlere Korngröße der Partikel des Stahlpulvers 10 - 200 µm beträgt.

8. Verwendung nach einem der voranstehenden Ansprüche, **dadurch gekennzeichnet, dass** im Gefüge des Stahlpulvers die Härte des Stahlpulvers steigernde Ausscheidungen vorhanden sind, die den Heusler-Phasen, Eta-Phasen und/oder Laves-Phasen angehören.

9. Verfahren zur Herstellung eines Stahlbauteils umfassend folgende Arbeitsschritte:
a) Erschmelzen einer Stahlschmelze mit folgender Zusammensetzung (in Gew.-):
| | | |
|---|---|---|
| C: | 0 | - 0,1 % |
| Si: | | ≤ 1,5% |
| Mn: | 9,0 | - 15,0% |
| Mo: | 0,01 | - 3,0% |
| N: | 0,004 | - 0,020 % |
| S: | | ≤ 0,40 % |
| Al: | 0,004 | - 10,0 % |
| B: | | < 0,0025 % |
| Nb: | | ≤ 0,25 % |
| Ti: | | ≤ 1,8 % |
| V: | | ≤ 1,0 % |
| Cu: | | ≤ 2,0 % |
| Cr: | | ≤ 5,0 % |
sowie optional Ni mit der Maßgabe, dass der Ni-Gehalt 0,5 - 4,0 % beträgt,
wobei für einen gemäß der Formel Z = 5 * %Ni + %Cr + 5 * %Mo aus dem jeweiligen Mo-Gehalt %Mo, dem jeweils vorhandenen Ni-Gehalt %Ni und/oder dem jeweils vorhandenen Cr-Gehalt %Cr des Stahlpulvers gebildeten Wert "Z" gilt Z < 35 Gew.-%,
Rest Eisen und herstellungsbedingt unvermeidbare Verunreinigungen;
b) Erzeugen eines Stahlpulvers aus der im Arbeitsschritt a) erschmolzenen Stahlschmelze;
c) Herstellen des Bauteils durch ein additives Fertigungsverfahrens,
c.1) bei dem mindestens eine Portion des Stahlpulvers volumenabschnittsweise einer zeitlich begrenzten Wärmezufuhr mit anschließender Abkühlung ausgesetzt wird, so dass die Stahlpulverpartikel, die im erwärmten Volumenabschnitt vorhanden sind und jeweils aneinander angrenzen, eine stoffschlüssige Verbindung eingehen und nach der Abkühlung zu mindestens einem Volumenabschnitt des herzustellenden Bauteils verfestigt sind;
c.2) bedarfsweise erneutes Auftragen einer weiteren Portion des Stahlpulvers auf den im Arbeitsschritt c.1) verfestigten Volumenabschnitt und Wiederholen des Arbeitsschritts c.1) mit der weiteren Portion des Stahlpulvers, wobei die Arbeitsschritte c.1) und c.2) wiederholt werden, bis das herzustellende Bauteil vollständig fertig geformt ist;
d) optionales formgebendes Bearbeiten der Bauteile;
e) optionales abschließendes Wärmebehandeln des erhaltenen Bauteils zur Bildung von festigkeitssteigernden Ausscheidungen im Gefüge des Bauteils, wobei die optionale Wärmebehandlung als Auslagerung durchgeführt wird, bei der das Bauteil über eine Dauer von 0,5 - 60 Stunden bei einer Temperatur von 400 - 700 °C gehalten wird.

## Claims

1. Use of a steel powder for the manufacture of components using an additive manufacturing process in which the steel powder is solidified by means of selective heat input in order to represent the component to be manufactured, wherein the steel powder has the following composition (in % by weight):
| | | |
|---|---|---|
| C: | 0 | - 0.1% |
| Si: | | ≤ 1.5% |
| Mn: | 9.0 | - 15.0% |
| Mo: | 0.01 | - 3.0% |
| N: | 0.004 | - 0.020% |
| S: | | ≤ 0.40% |
| Al: | 0.004 | - 10.0% |
| B: | | < 0.0025% |
| Nb: | | ≤ 0.25% |
| Ti: | | ≤ 1.8% |
| V: | | ≤ 1.0% |
| Cu: | | ≤ 2.0% |
| Cr: | | ≤ 5.0% |
and optionally Ni with the proviso that the Ni content is 0.5 - 4.0%, wherein Z < 35% by weight applies to the value "Z" formed from the respective Mo content %Mo, the respectively present Ni content %Ni and/or the respectively present Cr content %Cr of the steel powder according to the formula Z = 5 * %Ni + %Cr + 5 * %Mo,
Remainder iron and manufacture-related unavoidable impurities.

2. Use according to claim 1, **characterised in that** the Mn content of the steel powder is 9.0 - 12.0% by weight.

3. Use according to any one of the preceding claims, **characterised in that** the Al content of the steel powder is at least 4.0% by weight.

4. Use according to any one of the preceding claims, **characterised in that** the Ni content of the steel powder is at least 0.5 - 2.5% by weight.

5. Use according to any one of the preceding claims, **characterised in that** the value "Z" is at most 20% by weight.

6. Use according to claim 5, **characterised in that** the value "Z" is at most 15% by weight.

7. Use according to any one of the preceding claims, **characterised in that** the average grain size of the particles of the steel powder is 10 - 200 µm.

8. Use according to any one of the preceding claims, **characterised in that** precipitates increasing the hardness of the steel powder are present in the structure of the steel powder which belong to the Heusler phases, Eta phases and/or Laves phases.

9. Method for manufacturing a steel component, comprising the following work steps:
a) Melting a steel melt with the following composition (in % by weight):
| | | |
|---|---|---|
| C: | 0 | - 0.1% |
| Si: | | ≤ 1.5% |
| Mn: | 9.0 | - 15.0% |
| Mo: | 0.01 | - 3.0% |
| N: | 0.004 | - 0.020% |
| | | |
|---|---|---|
| S: | | ≤ 0.40% |
| Al: | 0.004 | - 10.0% |
| B: | | < 0.0025% |
| Nb: | | ≤ 0.25% |
| Ti: | | ≤ 1.8% |
| V: | | ≤ 1.0% |
| Cu: | | ≤ 2.0% |
| Cr: | | ≤ 5.0% |
and optionally Ni with the proviso that the Ni content is 0.5 - 4.0%, wherein Z < 35% by weight applies to a value "Z" formed from the respective Mo content %Mo, the respectively present Ni content %Ni and/or the respectively present Cr content %Cr of the steel powder according to formula Z = 5 * %Ni + %Cr + 5 * %Mo,
the remainder is iron and manufacture-related unavoidable impurities;
b) Generating a steel powder from the steel melt melted in work step a);
c) Manufacturing the component using an additive manufacturing process,
c.1) in which at least one portion of the steel powder by volume is exposed to a time-limited heat input with subsequent cooling, so that the steel powder particles, which are present in the heated volume portion and respectively adjoin each other, enter into a materially-bonded connection and are solidified after cooling to form at least one volume portion of the component to be manufactured;
c.2) if necessary, re-applying a further portion of the steel powder to the volume portion solidified in work step c.1) and repeating work step c.1) with the further portion of the steel powder, wherein work steps c.1) and c.2) are repeated until the component to be manufactured is completely finished;
d) optional machining to shape the components;
e) optional final heat treatment of the obtained component to form strength-enhancing precipitates in the structure of the component, wherein the optional heat treatment is carried out as an ageing process, in which the component is held for a duration of 0.5 - 60 hours at a temperature of 400 - 700 °C.

## Revendications

1. Utilisation d'une poudre d'acier pour la fabrication de composants par un procédé de fabrication additive dans lequel la poudre d'acier est solidifiée au moyen d'un apport thermique sélectif pour former le composant à fabriquer, où la poudre d'acier a la composition suivante (en % en poids) :
C : 0 - 0,1 %
Si : ≤ 1,5 %.
Mn : 9,0 -15,0 %.
Mo : 0,01 - 3,0 %.
N : 0,004 - 0,020 %
S : ≤ 0,40 %
Al : 0,004 - 10,0 %.
B : < 0,0025 %
Nb : ≤ 0,25 %
Ti : ≤ 1,8 %
V : ≤ 1,0 %
Cu : ≤ 2,0 %
Cr: ≤ 5,0%
et éventuellement du Ni, à condition que la teneur en Ni soit de 0,5 à 4,0 %, où, pour la valeur « Z » formée selon la formule Z = 5 ^{∗} %Ni + %Cr + 5 ^{∗} %Mo à partir de la teneur respective en Mo %Mo, de la teneur respective en Ni %Ni et/ou de la teneur respective en Cr %Cr de la poudre d'acier, s'applique Z < 35% en poids,
le reste étant du fer et des impuretés inévitables dues à la production.

2. Utilisation selon la revendication 1, **caractérisée en ce que** la teneur en Mn de la poudre d'acier est de 9,0 à 12,0 % en poids.

3. Utilisation selon l'une des revendications précédentes, **caractérisée en ce que** la teneur en Al de la poudre d'acier est d'au moins 4,0 % en poids.

4. Utilisation selon l'une des revendications précédentes, **caractérisée en ce que** la teneur en Ni de la poudre d'acier est de 0,5 à 2,5 % en poids.

5. Utilisation selon l'une des revendications précédentes, **caractérisée en ce que** la valeur "Z" est au maximum de 20% en poids.

6. Utilisation selon la revendication 5, **caractérisée en ce que** la valeur "Z" est au maximum de 15% en poids.

7. Utilisation selon l'une des revendications précédentes, **caractérisée en ce que** la granulométrie moyenne des particules de la poudre d'acier est de 10 à 200 µm.

8. Utilisation selon l'une des revendications précédentes, **caractérisée en ce que** des précipités augmentant la dureté de la poudre d'acier sont présents dans la structure de la poudre d'acier et appartiennent aux phases de Heu.sler, Eta et/ou de Laves.

9. Procédé de fabrication d'un composant en acier comprenant les étapes suivantes :
a) fusion d'un acier en fusion avec la composition suivante (en poids) :
C : 0 - 0,1 %
Si : ≤ 1,5 %
Mn : 9,0 -15,0 %
Mo : 0,01 - 3,0 %
N : 0,004 - 0,020 %
S : ≤ 0,40 %
Al : 0,004 - 10,0 %
B : < 0,0025 %
Nb : ≤ 0,25 %
Ti : ≤ 1,8 %
V : ≤ 1,0 %
Cu : ≤ 2,0 %
Cr : ≤ 5,0 %
et éventuellement du Ni, à condition que la teneur en Ni soit de 0,5 à 4,0 %,
et éventuellement du Ni, à condition que la teneur en Ni soit de 0,5 à 4,0 %, où, pour la valeur « Z » formée selon la formule Z = 5 ^{∗} %Ni + %Cr + 5 ^{∗} %Mo à partir de la teneur respective en Mo %Mo, de la teneur respective en Ni %Ni et/ou de la teneur respective en Cr %Cr de la poudre d'acier, s'applique Z < 35% en poids,
le reste étant du fer et des impuretés inévitables dues à la production ;
b) production d'une poudre d'acier à partir de l'acier fondu produit à l'étape a) ;
c) production du composant par un procédé de fabrication additive,
c.1) dans lequel au moins une portion de la poudre d'acier est soumise, par sections de volume, à un apport de chaleur limité dans le temps, suivi d'un refroidissement, de sorte que les particules de poudre d'acier présentes dans la section de volume chauffée et voisines les unes des autres forment une liaison matérielle et se solidifient après le refroidissement pour former au moins une section de volume du composant à fabriquer ;
c.2) si nécessaire, application renouvelée d'une portion supplémentaire de la poudre d'acier sur la section de volume solidifiée à l'étape de travail c.1) et répétition de l'étape de travail c.1) avec la portion supplémentaire de la poudre d'acier, les étapes de travail c.1) et c.2) étant répétées jusqu'à ce que le composant à produire soit complètement formé ;
d) le façonnage facultatif des composants ;
e) traitement thermique final facultatif du composant obtenu pour former, dans la structure du composant, des précipités augmentant la résistance, le traitement thermique facultatif étant effectué comme une opération de vieillissement dans laquelle le composant est maintenu à une température de 400 à 700 °C pendant une période de 0,5 à 60 heures.
